(19) Europäisches Patentamt
European Patent Office
Office européen des brevets

(11) EP 2 459 631 B1

## (12) EUROPÄISCHE PATENTSCHRIFT

(45) Veröffentlichungstag und Bekanntmachung des Hinweises auf die Patenterteilung:
**03.05.2017 Patentblatt 2017/18**

(21) Anmeldenummer: **10737786.3**

(22) Anmeldetag: **26.07.2010**

(51) Int Cl.:
*C09B 67/08* (2006.01)  *C09B 67/46* (2006.01)
*C08L 23/02* (2006.01)  *C08L 35/00* (2006.01)
*C08K 3/00* (2006.01)  *C08K 5/00* (2006.01)

(86) Internationale Anmeldenummer:
**PCT/EP2010/004560**

(87) Internationale Veröffentlichungsnummer:
**WO 2011/012276 (03.02.2011 Gazette 2011/05)**

(54) **PIGMENTKONZENTRATE**

PIGMENT CONCENTRATES

CONCENTRÉS DE PIGMENTS

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **28.07.2009 DE 102009034914**

(43) Veröffentlichungstag der Anmeldung:
**06.06.2012 Patentblatt 2012/23**

(73) Patentinhaber: **Clariant International Ltd
4132 Muttenz (CH)**

(72) Erfinder: **HOHNER, Gerd
86368 Gersthofen (DE)**

(74) Vertreter: **Graser, Konstanze et al
Clariant Produkte (Deutschland) GmbH
Patent Management
Lenbachplatz 6
80333 München (DE)**

(56) Entgegenhaltungen:
**EP-A1- 2 062 925      EP-A2- 0 498 195
EP-A2- 0 542 033      WO-A1-2009/091774
DE-A1- 19 648 895**

**Beschreibung**

Die vorliegende Erfindung betrifft die Verwendung eines Pigmentkonzentrats zur Einfärbung von thermoplastischen Kunststoffen, enthaltend mindestens ein Pigment und mindestens ein Copolymerwachs, wobei letzteres aus einem langkettigen $\alpha$-Olefin und einer ungesättigten Polycarbonsäure oder deren Anhydrid hergestellt wird.

Die Verwendung von Pigmentkonzentraten oder Pigmentpräparationen zur Einfärbung von thermoplastischen Kunststoffen ist Stand der Technik. Derartige Konzentrate enthalten neben dem Pigment polare oder unpolare Komponenten als Dispergierhilfe, zusätzlich optional auch Polymere als Trägermaterial. Die Vormischung des Pigments mit dem Dispergierhilfsmittel ermöglicht einen effizienten Aufschluss der Pigmentagglomerate und eine wirksame Verteilung der Farbpartikel. Dies ist Voraussetzung für eine effiziente Farbgebung im einzufärbenden Kunststoff, da Pigmente ihre volle koloristische Leistung nur in bestimmten Teilchengrößenbereichen entfalten. Bei der Einarbeitung des Konzentrats in den Kunststoff wird eine raschere, homogenere und feinteiligere Dispergierung der farbgebenden Teilchen erreicht, als dies bei einer direkten Einmischung des reinen Pigments möglich wäre.

Da die im Kunststoff erzielte Farbstärke entscheidend von der Qualität der Pigmentdispergierung abhängt, kommt der Beschaffenheit des verwendeten Konzentrats wesentliche technische und wirtschaftliche Bedeutung zu. Um bereits auf der Stufe des Konzentrats eine möglichst feine Verteilung der Pigmentteilchen zu erreichen, werden Pigment, Dispergierhilfe und Trägermaterial mit Hilfe wirksamer Mischtechnologien, d. h. unter Einsatz geeigneter Dispergiervorrichtungen, z. B. Schneckenextruder, beheizte Walzwerke oder Kneter gemischt. Von Bedeutung ist dabei der Eintrag ausreichend hoher Scherkräfte, eine ebenso wichtige Rolle spielen aber auch die chemischen und physikalischen Eigenschaften der verwendeten Dispergierhilfen. Diese können über ihr rheologisches Verhalten und ihre Polarität wirksam zur Benetzung und Zerteilung der Pigmente beitragen.

Für die Beurteilung der Qualität der Dispergierung können der bei der Filtration des eingefärbten Kunststoffs sich aufbauende Filterdruck sowie kolorimetrische Messdaten herangezogen werden. Nützlich als Bowertungskriterium ist auch die Homogenität einer aus dem eingefärbten Kunststoff hergestellten Testfolie.

Als Dispergierhilfen in Pigmentkonzentraten dienen z. B. Fettsäurederivate sowie nichtkristalline oder teilkristalline, polare oder unpolare Homo- oder Copolymere, insbesondere solche mit niedrigen Molekulargewichten, z. B. Wachse.

Aus DE-A- 4 236 337 ist die Verwendung von niedrigmolekularen Polymeren aus Acrylsäure-$C_{12}$-$C_{22}$-alkylestern als Dispergierhilfsmittel für Feststoffe, u. a. Pigmente, in organischen Medien bekannt. Die Synthese ist aufwendig und erfolgt durch radikalische Polymerisation von Acrylsäure-$C_1$-$C_4$-Alkylestern und anschließende Umesterung der Polymerisate mit $C_{12}$-$C_{22}$-Alkyl- oder Alkenylalkoholen.

Aus DE-A- 10223402 ist bekannt, dass Copolymerisate bestehend aus

-   Einheiten abgeleitet von $\alpha$-Olefinen der Kettenlänge $C_{12}$-$C_{60}$,
-   Einheiten abgeleitet aus ungesättigten Monocarbonsäuren,
-   Einheiten abgeleitet aus Estern ungesättigter Monocarbonsäuren sowie
-   Einheiten abgeleitet aus Styrol oder methylsubstituiertem Styrol als Bestandteil von Pigmentkonzentraten zur Einfärbung von thermoplastischen Kunststoffen verwendet werden können. Die Copolymerisate zeigen hinsichtlich der Messparameter Filterdruck und Farbstärke gute, aber nicht optimale Wirksamkeit.

Pigmentzubereitungen zur Herstellung von Pasten, Druckfarben und Lacken sind auch aus EP 0 542 033 A2, EP 2 062 925 A1 und DE 196 48 895 A1 bekannt. Es bestand daher die Aufgabe, auf synthetisch einfachem Weg Dispergiermittel mit verbesserter Wirksamkeit für die Verwendung in Pigmentkonzentraten bereitzustellen.

Bekannt sind radikalisch hergestellte Copolymerisate aus langkettigen $\alpha$-Olefinen und Maleinsäureanhydrid. Beispielsweise wird in der US-Patentschrift US-A-3, 553, 177 ein Verfahren zur Copolymerisation von Gemischen aliphatischer Olefine mit Maleinsäureanhydrid beschrieben. Die Reaktion wird mit Hilfe von Peroxiden und in Gegenwart von Ketonen als Lösungsmitteln durchgeführt.

Umsetzungsprodukte aus langkettigen Olefinen mit Maleinsäureanhydrid sind weiterhin aus DE-A-3 510 233 bekannt.

In EP-A- 1 693 047 werden Copolymerwachse für kosmetische, pharmazeutische und dermatologische Zubereitungen offenbart, hergestellt aus $C_{26}$-$C_{60}$-$\alpha$-Olefinen und Maleinsäureanhydrid. Die Wachse sind emulgierbar, sie eignen sich zur Konsistenzgebung von Pasten, Cremes und Stiften und zeichnen sich vor allem durch eine hohe Wasserfestigkeit aus. Sie verbessern auch das Aufnahmevermögen und erleichtern die Eindispergierung von Pigmenten in die Lipidphase kosmetischer Zubereitungen. In Ausführungsbeispiel 11 ist die Herstellung einer Mascararezeptur beschrieben, wobei Pigment in eine aus Emulgator, Stearinsäure, Copolymerwachs, Siliconen, natürlichen Esterwachsen sowie hydriertem Oligoolefin bestehenden Schmelze eingerührt und diese dann zu einer wässrigen Zubereitung weiter verarbeitet wird.

Überraschend wurde gefunden, dass sich Copolymerwachse hergestellt aus langkettigen $\alpha$-Olefinen und un-

gesättigten Polycarbonsäuren oder deren Anhydriden in hervorragender Weise als Komponente für die Herstellung von Pigmentkonzentraten zur Einfärbung von thermoplastischen Kunststoffen eignen.

Die mit derartigen Pigmentkonzentraten eingefärbten Kunststoffmaterialien zeigen hohe Farbstärken und gute Homogenitäten. Ihre Schmelzen weisen niedrige Filterwerte auf, was gleichbedeutend mit einer effektiven Dispergierung der Pigmentteilchen ist.

Die Herstellung der in den Pigmentkonzentraten als Dispergierhilfen enthaltenen Copolymerwachse ist besonders einfach, da lediglich zwei Komponenten miteinander umgesetzt werden müssen.

Gegenstand der Erfindung ist daher die Verwendung eines Pigmentkonzentrats zur Einfärbung von thermoplastischen Kunststoffen, enthaltend

- mindestens ein Farbpigment,
- mindestens ein Copolymerwachs, hergestellt durch Umsetzung von langkettigen Olefinkohlenwasserstoffen im Kettenlängenbereich $\geq 12$ C-Atome mit ungesättigten Polycarbonsäuren oder deren Anhydriden in Gegenwart mindestens eines Radikalstarters und enthaltend

a) 40 - 60 mol-% Einheiten, die sich von $\alpha$-Olefinen der Kettenlänge $C_{12}$-$C_{60}$, bevorzugt $C_{24}$-$C_{60}$, besonders bevorzugt $C_{28}$-$C_{60}$ ableiten, sowie
b) 60 - 40 mol-% Einheiten, die sich von ungesättigten Polycarbonsäuren oder deren Anhydriden ableiten, sowie

gegebenenfalls mindestens ein thermoplastisches Polyolefin.

Für die Herstellung der Copolymerwachse können sowohl kettenreine $\alpha$-Olefine als auch $\alpha$-Olefingemische eingesetzt werden, wie sie z. B. in den bekannten Herstellverfahren als Destillationsschnitte oder Destillationsrückstände anfallen. Technische $\alpha$-Olefingemische, insbesondere solche mit höherer Kettenlänge, können neben 1-Alkenen mehr oder minder hohe Mengen innen- und seitenständige olefinische Doppelbindungen (Vinylen- und Vinylidengruppen) enthalten. Als ein bevorzugter $\alpha$-Olefin-Rohstoff kommt das unter der Handelsbezeichnung Alpha Olefin $C_{30}$+ erhältliche Olefingemisch der Firma Chevron Phillips mit Kettenlängen im Wesentlichen zwischen 28 und 52 C-Atomen in Betracht.

Repräsentative Beispiele für die zur Umsetzung mit den $\alpha$-Olefinen verwendeten ungesättigten Polycarbonsäuren bzw. Anhydride sind Maleinsäure, Fumarsäure, Citraconsäure, Mesaconsäure, Aconitsäure oder Itaconsäure bzw. die Anhydride dieser Polycarbonsäuren, soweit zugänglich. Bevorzugt ist Maleinsäureanhydrid.

Es können auch Mischungen dieser Polycarbonsäuren und Anhydride in beliebigen Verhältnissen eingesetzt werden.

Bevorzugt ist die Verwendung von Maleinsäureanhyrid.

Die Herstellung der erfindungsgemäßen verwendeten Copolymerwachse erfolgt in an sich bekannter Weise durch Umsetzung der oben genannten Komponenten bei erhöhter Temperatur unter Zusatz von organischen oder anorganischen radikalbildenden Initiatoren. Die Reaktion kann in Gegenwart oder in Abwesenheit eines Lösungsmittels durchgeführt werden. Letzteres Verfahren ist bevorzugt. Weiterhin kann die Umsetzung sowohl diskontinuierlich batchweise, z. B. im Rührkessel oder aber in einem kontinuierlich arbeitenden Reaktor erfolgen.

Bei der radikalischen Copolymerisation von $\alpha$-Olefinen mit Maleinsäureanhydrid resultieren in der Regel annähernd alternierende Copolymerstrukturen.

Das molare Einsatzverhältnis von Polycarbonsäureanhydrid und $\alpha$-Olefin liegt daher bevorzugt zwischen 0,4:0,6 und 0,6:0,4. Daraus ergibt sich bei Verwendung eines kommerziell erhältlichen $\alpha$-Olefins im typischen Kettenlängenbereich von $C_{28}$-$C_{52}$ mit einer durchschnittlichen Molmasse von ca. 500 g/mol eine Einsatzmenge, bezogen auf $\alpha$-Olefin, von ca. 13 bis 29 Gew.-% Anhydrid. Bevorzugte Maleinsäureanhydrideinsätze für derartige Olefinrohstoffe liegen zwischen 14 und 20, besonders bevorzugte zwischen 15 und 18 Gew.-%.

Geeignete organische Initiatoren sind z. B. Peroxide, beispielsweise Alkylhydroperoxide oder Dialkyl- oder Diarylperoxide, Diaroylperoxide, Perester oder Azoverbindungen. Bevorzugt sind Dialkylperoxide, speziell bevorzugt ist Di-tert.-butylperoxid. Es kommt jedoch auch jeder andere Initiator in Frage, sofern er bei der gewählten Reaktionstemperatur in Radikale zerfällt und die Reaktion in Gang zu setzen vermag. Die Initiatoren kommen in einer Menge von 0,1 bis 10 Gew.-%, bevorzugt 0,5 bis 5,0 Gew.-%, bezogen auf eingesetztes $\alpha$-Olefin, zur Anwendung.

Die Reaktionstemperaturen liegen, wenn die Reaktion in Abwesenheit von Lösungsmittel durchgeführt wird, oberhalb der Schmelztemperatur des $\alpha$-Olefins, z. B. zwischen 100 und 200 °C, bevorzugt 120 bis 180 °C, besonders bevorzugt zwischen 140 und 170 °C. Bei Anwesenheit von Lösungsmitteln kommen je nach Lösungsvermögen darüber hinaus auch Reaktionstemperaturen unterhalb des Schmelzpunkts des $\alpha$-Olefins in Frage.

Für die Herstellung des Pigmentkonzentrats sind alle Pigmente geeignet, die für die Einfärbung von Kunststoffen verwendet werden. Es kommen sowohl anorganische als auch organische Pigmente in Frage.

Beispielhaft für anorganische Pigmente seien Ruß, Metallpulver, Metalloxide wie Titandioxid, Zinkoxid und Eisenoxide, Metallsulfide, Silikate wie Ultramarinblau, Chromate und Vanadate genannt.

Beispiele für organische Pigmente sind Azo- oder Disazopigmente, verlackte Azopigmente, Metall-Phtalocyanin-, Chinacridon-, Perylen-, Dioxazin-, Anthrachinon-, Thioindigo-, Diaryl-, Triphenylmethan- oder Chinophtalonpigmente.

Andere Beispiele für in Frage kommende Pigmente finden sich in einschlägigen Standardwerken wie z. B. Herbst, Hunger, Industrielle organische Pigmente, 2. Auflage 1995, Seiten 4 - 11.

Die erfindungsgemäß eingesetzten Pigmentkonzentrate können weiterhin als Trägermaterial homo- oder copolymere thermoplastische Polyolefine wie z. B. Polyethylen mit hoher (PE-HD) oder niedriger Dichte (PE-LD, PE-LLD), Polypropylen, Polystyrol oder Copolymere mit Anteilen von Heteroatome aufweisenden Monomeren, z. B. Ethylen-Vinylacetat-Copolymere oder Ethylen-(Meth)acrylsäure-Copolymere enthalten.

Zur weiteren anwendungstechnischen Optimierung kann das Konzentrat neben dem dem farbgebenden Pigment, dem Copolymerwachs und optional dem thermoplastischen Polyolefin noch zusätzliche die Pigmentdispergierung begünstigende Komponenten, beispielsweise Fettderivate, etwa Fettsäurester oder -seifen oder Wachse natürlicher oder synthetischer Herkunft, z. B. Polyolefinwachse, enthalten. Als Polyolefinwachse kommen u. a. Polyethylen- oder Polypropylenwachse in Frage, hergestellt durch thermischen Abbau von Polyolefin-Kunststoff, durch radikalischen Aufbau, z. B. ausgehend von Ethylen, gegebenenfalls in Kombination mit weiteren, auch polaren Monomeren wie (Meth)acrylaten oder Vinylacetat oder durch Polymerisation mit Hilfe von metallhaltigen Koordinationskatalysatoren vom Ziegler-Natta-, Philips- oder Metallocentyp. In Frage kommen weiterhin Wachse natürlicher Herkunft wie Montan- oder Carnaubawachs oder deren beispielsweise durch oxidative Bleichung oder sonstige chemische Derivatisierung, z. B. Verseifung zugängliche Folgeprodukte. Entsprechende Materialien und Herstellverfahren sind z. B. in Ullmann's Encyclopedia of Industrial Chemistry, 5th ed. 1996, Vol. A 28, Seiten 103 bis 160 ausgeführt.

Die erfindungsgemäß verwendten Pigmentkonzentrate enthalten 10 bis 70 Gew.-% eines oder mehrerer Pigmente, 1 bis 60 Gew.-% des aus α-Olefin und ungesättigter Polycarbonsäure oder deren Anhydrid hergestellten Copolymerwachses und 0 bis 60 Gew.-% eines oder mehrerer thermoplastischer Polyolefine.

Bevorzugt enthalten die Pigmentkonzentrate 20 bis 60 Gew.-% Pigment, 10 bis 40 Gew.-% Copolymerwachs und 10 bis 50 Gew.-% Polyolefin.

Zusätzlich können in den erfindungsgemäß eingesetzten Pigmentkonzentraten bis zu 5 Gew.-% stabilisierende Additive wie z. B. Antioxidantien oder Lichtschutzmittel enthalten sein.

Kunststoffformmassen oder Kunststofffertigprodukte können mit den beschriebenen Pigmentkonzentraten eingefärbt werden.

Zur Herstellung des Pigmentkonzentrats hat es sich bewährt, die festen Einzelkomponenten in geeigneten Mischaggregaten zunächst vorzumischen. Dies kann in bekannter Weise durch Heiß- oder Kaltmischung erfolgen. Copolymerwachs und gegebenenfalls weitere Wachse können dabei in grob- bis feinteiliger oder auch mikronisierter Form, in letzterem Fall beispielsweise mit mittleren Partikelgrößen ($d_{50}$-Werten) zwischen 5 und 15 µm eingesetzt werden. Die Mikronisierung kann durch Versprühung der Wachsschmelze oder durch Mahlung, z. B. mit Hilfe von Luftstrahlmühlen erfolgen. Der Versprühung oder Vermahlung kann sich gegebenenfalls eine Klassierung anschließen. Die eigentliche Pigmentdispergierung erfolgt anschließend durch Aufschmelzen und Verkneten der Vormischung in einem Extruder oder Kneter. Die Schmelze wird anschließend in üblicher, aus der Polymertechnologie bekannter Weise z. B. zu Granulaten oder Pellets verarbeitet.

Die erfindungsgemäß verwendeten Pigmentkonzentrate eignen sich zur Einfärbung von thermoplastisch verarbeitbaren Polymeren unterschiedlichster Zusammensetzung, beispielsweise Polyolefinen wie Polyethylen, Copolymeren des Ethylens mit anderen unpolaren oder mit polaren Olefinen, Polypropylen sowie Polybutadien oder Polystyrol, ferner Polyalkylenterephtalat, Poly(meth)acrylat, Polyamid, Polyvinylchlorid, Polyacrylnitril, Polysulfon, Polyetherketon, Polyoxymethylen, Acrylnitril-Butadien-Styrol-Terpolymeren u. a.

Beispiele:

Die dynamischen Viskositäten der Copolymerwachse wurden in der Schmelze nach DIN 53019-1 bis 3 mit einem Rotationsviskosimeter, die Tropfpunkte mit Hilfe eines Gerätes vom Typ FP 900 der Firma Mettler nach ASTM D 3954 bestimmt. Die Säurezahlbestimmung erfolgte nach DIN 53402, mit dem Unterschied, dass die verwendeten Lösemittel Toluol und Ethanol in wasserfreier Form eingesetzt wurden, um eine hydrolytische Aufspaltung der Anhydridgruppen zu vermeiden. Die Partikelgrößenanalyse bei Mikronisaten wurde durch Laserbeugung mittels eines Gerätes des Typs Mastersizer 2000 (Malvern) unter Verwendung der Dispergiereinheit Scirocco 2000 durchgeführt.

Beispiel A: Herstellung eines Copolymerwachses ("Copolymerwachs A") aus α-Olefin und Maieinsäureanhydrid

2.500 g = 4,92 mol α-Olefin $C_{30}$+ (Olefingemisch der Fa. Chevron Phillips) wurden in einer mit Rührwerk, Innenthermometer und Destillationsbrücke ausgestatteten Glasapparatur unter Stickstoffüberlagerung aufgeschmolzen. Anschließend wurden 375 g = 3,83 mol Maleinsäureanhydrid, verteilt auf sechs gleiche Portionen in Abständen von jeweils 30 min. zudosiert. Innerhalb des gleichen Zeitraums wurde aus einem Tropftrichter kontinuierlich 50 g Di-tert.-butylperoxid zugegeben. Anschließend ließ man 1 h nachreagieren. Hierauf wurden flüchtige Anteile im Vakuum (ca. 30 mbar) abdestilliert. Nach ca. 30 min. wurde durch Einleiten von Stickstoff auf Normaldruck entspannt. Die Säurezahl des resultierenden Copolymerwachses betrug 80 mg KOH/g, die Viskosität bei 90 °C 329 mPa*s, der Tropfpunkt 74 °C.

Vergleichsbeispiel

Gemäß DE-A- 102 23 402 A1, Seite 3, Z. 55 ff wurde ein Copolymerisat ("Copolymerisat V") aus $C_{26^-60}$-$\alpha$-Olefin, Methylacrylat und Acrylsäure hergestellt (Säurezahl 7 mg KOH/g. Tropfpunkt 71 °C).

Für die anwendungstechnischen Prüfungen wurde das Copolymerwachs entweder in grob gemahlener (Labormühle, Korngröße $d_{100}$ < 2 mm, "Feinkorn") oder in mikronisierter Form ("Mikronisat") eingesetzt. Die Mikronisierung erfolgte durch Mahlung auf einer Luftstrahlmühle 100 AFG (Hosokawa Micron) und führte zu feinpulverigem Produkt mit einem $d_{100}$-Wert von < 30 $\mu$m und einem $d_{50}$-Wert von 8,0 $\mu$m.

Das grob gemahlene oder mikronisierte Copolymerwachs wurde in einem Henschel-Mischer mit dem jeweiligen Pigment sowie den unten angegebenen Polyolefinen gemischt (Kaltmischung, 600 Umdrehungen/min, Dauer 10 min). Die Mischung wurde anschließend in einem Zweischneckenextruder (Berstorff ZE 25x40 D) zu Granulat konfektioniert. Dieses wurde gemäß DIN-EN 13900-5 in Kunststoff eingearbeitet und die Mischung mittels Druckfiltertest charakterisiert. Die Dispergierqualität wurde zusätzlich colorimetrisch durch Messung der Farbstärke nach DIN 55986 bestimmt.

Zur Durchführung des Druckfiltertests wurde die Schmelze des mit dem Pigmentkonzentrat eingefärbten thermoplastischen Kunststoffs über eine Zahnradpumpe durch ein Siebfilter gepresst und der vor dem Filter sich aufbauende Druck gemessen. Je schlechter das Pigment dispergiert ist, desto höher ist der Druckaufbau vor dem Filter. Als Maß für den Filterdruck dient der nach folgender Beziehung ermittelte "Filterwert" F:

$$F = (P_{max} - P_o)/m_w \ [bar/g]$$

wobei $P_{max}$ der maximale vor dem Filter gemessene Druck, $P_o$ der Druck vor dem Filter für den nicht eingefärbten Kunststoff und $m_w$ die Masse des durchgesetzten Dispergiermittels ist.

Zur Bestimmung der "Filmnote" wurde mit 2 Gew.-% des Pigmentkonzentrats eingefärbter LDPE-Kunststoff auf einer Folienblasanlage zu einem Film mit der Schichtdicke von ca. 0,04 mm verarbeitet. Die Folie wurde visuell bei fünffacher Vergrößerung bzw. photographisch mit Hilfe eines automatisierten Auswertesystems hinsichtlich Stippen und sonstigen Störungen der Homogenität beurteilt und mit Noten von 1 (gut) bis 5 (schlecht) bewertet.

Anwendungstechnische Prüfungen

Beispiel 1

Prüfung eines Pigmentkonzentrats bestehend aus Pigment Echtblau A4R (Cu-Phtalocyanin), Escorene LL 6101 (LLDPE, Hersteller Exxon) und Copolymerwachs A bzw. Copolymerisat V im Gewichtsverhältnis 2:2:1 nach Einarbeitung in PE-Matrix.

Ergebnisse:

| | Matrix | Copolymerwachs A (Feinkorn) | Copolymerwachs A (Mikronisat) | Copolymerisat V*) (Feinkorn) | Referenz ohne Wachs |
|---|---|---|---|---|---|
| Filterwert [bar/g] | Riblene FL 30 PE (Polimeri Europa) | 0,82 | 0,36 | 1,30 | 3,38 |
| Relative Farbstärke [%] | Hostalen GC 7260 PE (LyondellBasell) | 106 | 108 | 102 | 100 |
| *) Vergleichsbeispiel | | | | | |

Beispiel 2

Prüfung eines Pigmentkonzentrats bestehend aus Pigment Blue 15:1 (Cu-Phtalocyanin), HG 245 (PP-Homopolymer, Borealis) und Copolymerwachs A im Gewichtsverhältnis 2:2:1 nach Einarbeitung in PP-Matrix.

Ergebnisse:

|  | Matrix | Copolymerwachs A (Feinkorn) | Copolymerwachs A (Mikronisat) | Referenz ohne Wachs |
|---|---|---|---|---|
| Filterwert [bar/g] | Borclear RB 707 (Borealis) | 1,92 | 0,94 | 10,2 |
| Relative Farbstärke [%] | Moplen HP 500N (LyondellBasell) | 103 | 103 | 100 |

Beispiel 3

Prüfung eines Pigmentkonzentrats bestehend aus Pigment Echtviolett RL, Escorene LL 6101 (LLDPE, Hersteller Exxon) und Cupolymerwachs A im Gewichtsverhältnis 2:2:1 nach Einarbeitung in PE-Matrix.

Ergebnisse:

|  | Matrix | Copolymerwachs A (Feinkorn) | Copolymerwachs A (Mikronisat) | Referenz ohne Wachs |
|---|---|---|---|---|
| Filterwert [bar/g] | Riblene FL 30 PE (Polimeri Europa) | 0,12 | 0,14 | 0,76 |
| Relative Farbstärke [%] | Hostalen GC 7260 (LyondellBasell) | 97 | 114 | 99 |
| Filmnote | Sabic 2102 TX PE (Sabic) | 2,0 | 2,5 | 3,0 |

Beispiel 4

Prüfung eines Pigmentkonzentrats bestehend aus Pigment Violet 23, Escorene LL 6101 (LLDPE, Hersteller Exxon) und Copolymerwachs A im Gewichtsverhältnis 2:2:1 nach Einarbeitung in PP-Matrix

Ergebnisse:

|  | Matrix | Copolymerwachs A (Feinkorn) | Copolymerwachs A (Mikronisat) | Referenz ohne Wachs |
|---|---|---|---|---|
| Filterwert [bar/g] | Borclear RB 707 (Borealis) | 0,28 | 0,36 | 2,92 |
| Relative Farbstärke [%] | Moplen HP 500N (LyondellBasell) | 101 | 105 | 100 |

Beispiel 5

Prüfung eines Pigmentkonzentrats bestehend aus Pigment Green 7 (Cu-Phtalocyanin-Pigment), Polyethylenterephtalat (Bripet 2000 BST, Brilèn) und Copolymerwachs A im Gewichtsverhältnis 30:65:5 nach Einarbeitung in PET-Matrix

Ergebnisse:

|  | Matrix | Copolymerwachs A (Feinkorn) | Copolymerwachs A (Mikronisat) | Referenz ohne Wachs |
|---|---|---|---|---|
| Filterwert [bar/g] | Polyclear 3304 PET | 2,8 | 4,18 | 18,7 |

(fortgesetzt)

|  | Matrix | Copolymerwachs A (Feinkorn) | Copolymerwachs A (Mikronisat) | Referenz ohne Wachs |
|---|---|---|---|---|
| Relative Farbstärke [%] | Polyclear 3304 PET | 114 | 115 | 100 |

**Patentansprüche**

1. Verwendung eines Pigmentkonzentrat, enthaltend

   - mindestens ein Farbpigment,
   - mindestens ein Copolymerwachs, hergestellt durch Umsetzung von langkettigen Olefinkohlenwasserstoffen im Kettenlängenbereich
   $\geq$ 12 C-Atome mit ungesättigten Polycarbonsäuren oder deren Anhydriden in Gegenwart mindestens eines Radikalstarters und enthaltend

   a) 40 - 60 mol-% Einheiten, die sich von $\alpha$-Olefinen der Kettenlänge $C_{12}$-$C_{60}$, bevorzugt $C_{24}$-$C_{60}$, besonders bevorzugt $C_{28}$-$C_{60}$ ableiten, sowie
   b) 60 - 40 mol-% Einheiten, die sich von ungesättigten Polycarbonsäuren oder deren Anhydriden ableiten, sowie

   gegebenenfalls mindestens ein thermoplastisches Polyolefin, zur Einfärbung von thermoplastischen Kunststoffen.

2. Verwendung eines Pigmentkonzentrats nach Anspruch 1, **dadurch gekennzeichnet, dass** das Copolymerisat in mikronisierter Form mit einem $d_{50}$-Wert zwischen 5 und 15 $\mu$m eingesetzt wird.

**Claims**

1. The use, for coloring thermoplastics, of a pigment concentrate comprising

   - at least one color pigment,
   - at least one copolymer wax produced via reaction of long-chain olefin hydrocarbons in the chain length range $\geq$ 12 carbon atoms with unsaturated polycarboxylic acids or anhydrides thereof in the presence of at least one free-radical initiator, and comprising

   a) from 40 to 60 mol% of units which derive from $\alpha$-olefins of chain length $C_{12}$-$C_{60}$, preferably $C_{24}$-$C_{60}$, particularly preferably $C_{28}$-$C_{60}$, and also
   b) from 60 to 40 mol% of units which derive from unsaturated polycarboxylic acids or from anhydrides thereof, and also

   optionally at least one thermoplastic polyolefin.

2. The use of a pigment concentrate as claimed in claim 1, wherein the copolymer is used in micronized form with a $d_{50}$ value from 5 to 15 $\mu$m.

**Revendications**

1. Utilisation d'un concentré de pigment, contenant

   - au moins un pigment coloré,
   - au moins une cire de copolymère, fabriquée par mise en réaction d'hydrocarbures oléfiniques à chaînes longues dans la plage de longueurs de chaînes $\geq$ 12 atomes C avec des acides polycarboxyliques insaturés ou leurs anhydrides en présence d'au moins un démarreur radicalaire et contenant

a) 40 à 60 % en moles d'unités qui dérivent d'$\alpha$-oléfines d'une longueur de chaîne en $C_{12}$-$C_{60}$, de préférence en $C_{24}$-$C_{60}$, de manière particulièrement préférée en $C_{28}$-$C_{60}$, et
b) 60 à 40 % en moles d'unités qui dérivent d'acides polycarboxyliques insaturés ou leurs anhydrides, et éventuellement au moins une polyoléfine thermoplastique, pour la coloration de plastiques thermoplastiques.

2. Utilisation d'un concentré de pigment selon la revendication 1, **caractérisée en ce que** le copolymère est utilisé sous une forme micronisée ayant une valeur $d_{50}$ comprise entre 5 et 15 $\mu$m.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4236337 A
- DE 10223402 A
- EP 0542033 A2
- EP 2062925 A1
- DE 19648895 A1
- US 3553177 A
- DE 3510233 A
- EP 1693047 A
- DE 10223402A1 A

**In der Beschreibung aufgeführte Nicht-Patentliteratur**

- **HERBST, HUNGER.** Industrielle organische Pigmente. 1995, 4-11
- Ullmann's Encyclopedia of Industrial Chemistry. 1996, vol. A 28, 103-160